# EUROPEAN PATENT SPECIFICATION

(11) **EP 4 385 868 B1**
(45) Date of publication and mention of the grant of the patent: **11.02.2026**
(21) Application number: 22213818.2
(22) Date of filing: 15.12.2022
(51) Int. Cl.: B62J 45/40, B62K 23/00

(54) **BICYCLE FRAME WITH TAP TOUCH SENSOR**
FAHRRADRAHMEN MIT ANTIPPEN-BERÜHRUNGSSENSOR
CADRE DE VÉLO AVEC CAPTEUR TACTILE DE TAPOTAGE

(43) Date of publication of application: 19.06.2024
(73) Proprietor: MAHLE International GmbH, 70376 Stuttgart (DE)
(72) Inventor: Lobos, Daniel, 47194 Valladolid (ES); Rakhnenko, Yaroslav, Palencia (ES); Rico Sanz, Alberto Jesus, Valladolid (ES)

(56) References cited:
- CN-A- 110 466 658
- CN-A- 111 874 136

## Description

### TECHNICAL FIELD

The invention relates to a bicycle frame according to the preamble of independent claim 1. The invention furthermore relates to a method for controlling or operating an electrically controlled bicycle component according to the preamble of independent claim 10 and to the use of a bicycle frame or a bicycle handlebar or a bicycle pedal of a bicycle as a tap input surface for controlling or operating an electrically controlled bicycle component according to the preamble of claim 15.

### BACKGROUND ART

Bicycles can be provided with means for controlling/operating an electrically controlled bicycle component. A typical known prior art device for controlling/operating an electrically controlled bicycle component is described in EP 1375325 A2. This describes a switch which is mounted on the handlebar of a bicycle. The switch comprises a button portion for manually toggling between different switch positions. Further relevant documents are CN 111 874 136 A, disclosing the features of the preamble of claims 1, 10 and 15; and CN 110 466 658 A.

### SUMMARY

The bicycle frame according to the invention as defined in claim 1 has the advantage that electrically controlled bicycle components can be controlled without providing a manually operated device attached to the bicycle handlebar.

This object is achieved according to a first aspect of the invention with a bicycle frame for supporting a front wheel and a rear wheel, the frame comprising a plurality of tubular sections, a control unit arranged at least partly in one of the tubular sections, wherein the control unit comprises a housing, which is rigidly attached to the tubular section, wherein at least one accelerometer is arranged within the control unit housing and arranged to sense an acceleration of the tubular section containing the control unit in the area of the control unit, and further comprising a memory storing a tap recognition algorithm and a processor for analyzing an output signal of the at least one accelerometer using the tap recognition algorithm in order to determine a tap action.

A bicycle frame according to the invention can used for a human powered bicycle or a human powered bicycle with electric motor assist, otherwise known as pedelec.

By using the accelerometer in the control unit within the bicycle frame, the frame itself can be used as the input device for controlling various aspects of the bicycle. A separate input device with cables connected to a control unit is not required, instead the operator can tap on the bicycle frame, e.g. in the vicinity of the control unit, and the acceleration of the control unit containing the accelerometer will be substantially the same as the acceleration of the frame in the vicinity of the control unit due to the rigid attachment of the frame with the control unit housing. A separate input device can thus be omitted reducing component costs. The operator of the bicycle does not need to locate a manual switch and can tap the frame whilst looking at the road ahead. The tap recognition algorithm can be configured to differentiate between a plurality of different predetermined tap actions, wherein the control unit is configured to output a signal for controlling or operating an electrically controlled bicycle component based on the determined tap action. In particular, the tap recognition algorithm can be configured to differentiate between a tap on the left side of the tubular section and a tap on the right side of the tubular section. The left and right sides being defined with respect to a forward travelling direction of the bicycle. A tap on the left side of the frame tubular section can be used for example to reduce the assist level of a motor provided on the bicycle to assist the pedal power, and a tap on the right side of the frame can be used to increase the assist level of the motor. Alternatively or additionally, the tap algorithm can be configured to differentiate between a tap on top side of the tubular section and a tap on the lateral side (i.e. left or right side) of the tubular section. A tap on the top side of the frame can therefore be used e.g. to turn a front or rear light on or off or alternatively block/unblock the bicycle suspension.

The different sides of the tubular frame section, in particular the top, left side and right side, can therefore be used as tapping input surfaces to operate or control a plurality of different electrically controlled bicycle components.

The different tap actions can also be in the form of a single or double tap, whereby the single tap action is determined by calculating the gradient of the acceleration between two consecutive acceleration samples, such that if the gradient exceeds a predetermined threshold a single tap action is determined, and wherein a double tap action is determined when two consecutive single tap actions are determined within a predetermined time window.

The tap recognition algorithm can be defined by machine learning.

In a further aspect a bicycle is provided having a frame according to the invention described above.

The bicycle comprises pedals and a handlebar for steering the bicycle, the handlebar being pivotally attached to the frame. In a further embodiment of the invention the handlebar can be used as an additional or alternative tap input surface. Although the handlebar is pivotally attached to the bicycle frame, a tap on specific parts of the handlebar can result in a translation motion of the handlebar, which can be transferred through the pivotal attachment to the frame.

The tap recognition algorithm can be configured to differentiate between a tap on the left side of the tubular section, a tap on the right side of the tubular section and/or a tap on bicycle handlebar.

The different sides of the tubular frame section, in particular the top side, left side and right side, and the handlebar can therefore be used as tapping input surfaces to operate or control a plurality of different electrically controlled bicycle components.

The bicycle can be a motor assisted bicycle comprising an electric motor and a battery can be arranged inside a tubular frame section and connected to the control unit, wherein the control unit determines the power supplied to the electric motor.

In an advantageous embodiment the at least one accelerometer in the control unit can also be used to provide a speed calculation algorithm stored in the control unit with acceleration data for calculating a speed of the bicycle.

In a preferred embodiment the control unit is arranged at least partly in the top tube of the bicycle frame. The control unit can therefore be easily connected via a cable in the bicycle frame to a battery in the down tube. The control unit can further include a display for displaying information to the rider. The display can for example be an LED display for displaying the charge level of a battery of the bicycle.

In a further embodiment a tap action can be in the form of a specific combination of different taps. For example, a specific combination of taps can be defined from at least two different taps of the following taps: a single left tap, a single right tap, a single top tap, a double left tap, a double right tap, a double top tap. This combination is then recognized by the tap recognition algorithm as a specific tap action, which can then be used for controlling an electric component of the bicycle. The electrical component can be the battery arranged in the bicycle frame such that power from the battery can only be supplied to an electric motor after a specific unlocking combination of taps is performed.

The frame tap input can also be complimented by a second input device attached to the handlebar of the bicycle for controlling or operating the same electrically controlled bicycle component which is controlled based on the determined tap action. In this case the use of the frame as an input device provides redundancy.

In another aspect a method for controlling or operating an electrically controlled bicycle component is provided, the method comprising providing a bicycle frame for supporting a front wheel and a rear wheel, the frame comprising a plurality of tubular sections wherein a control unit is arranged at least partly in one of the tubular sections, wherein the control unit comprises a housing, which is rigidly attached to the tubular section, and the housing contains at least one accelerometer, the method further comprising sensing via the accelerometer an acceleration of the tubular section containing the control unit in the area of the control unit, supplying an output signal of the at least one accelerometer to a processor, and using a tap recognition algorithm to determine a tap action and controlling or operating an electrically controlled bicycle component based on the determined tap action. The method can include using the tap recognition algorithm to differentiate between a plurality of different tap actions according to the invention as described above.

The tap action can be a tap on a part of a tubular section of the frame or a tap on the handlebar of a bicycle comprising such a frame.

In a further aspect, the use of a bicycle frame or a bicycle handlebar or bicycle pedals of a bicycle as a tap input surface for controlling or operating an electrically controlled bicycle component is provided, whereby the bicycle frame comprises a plurality of tubular sections, and a control unit is arranged at least partly in one of the tubular sections, preferably a top tube, wherein the control unit comprises a housing, which is rigidly attached to the tubular section, wherein at least one accelerometer is arranged within the control unit housing and arranged to sense an acceleration of the tubular section containing the control unit in the area of the control unit, the acceleration due to a tap on the tap input surface, and the control unit further comprising a memory storing a tap recognition algorithm and a processor for analyzing an output signal of the at least one accelerometer using the tap recognition algorithm in order to determine a tap action from a selection of predetermined tap actions.

### BRIEF DESCRIPTION OF THE DRAWINGS

Embodiments will now be described by way of example only with reference to the accompanying drawings, in which:
Figure 1 is a side view of a bicycle according to the invention,
Figure 2 is a top perspective view of part of the bicycle according to the invention,
Figure 3 is a perspective view of part of the bicycle according to the invention,

### DETAILED DESCRIPTION

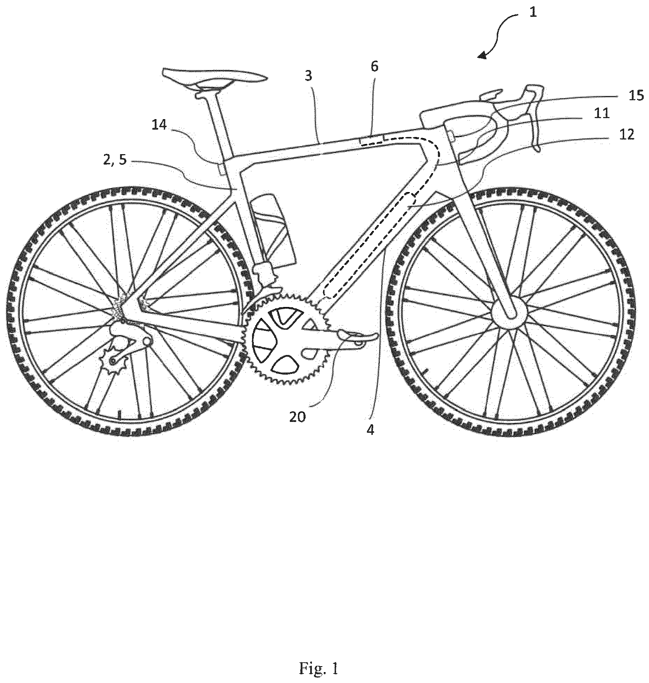

Figure 1 shows a bicycle 1 according to the invention. In the embodiment shown the bicycle 1 is a human powered bicycle with electric motor assist, otherwise known as pedelec. The invention however applies to other types of bicycles. The bicycle 1 comprises a frame 2 for supporting a front and rear wheel. The frame 2 is made out of a plurality of tubular sections which are welded together. In particular, the frame 2 comprises a top tube 3, a down tube 4 and a seat tube 5.

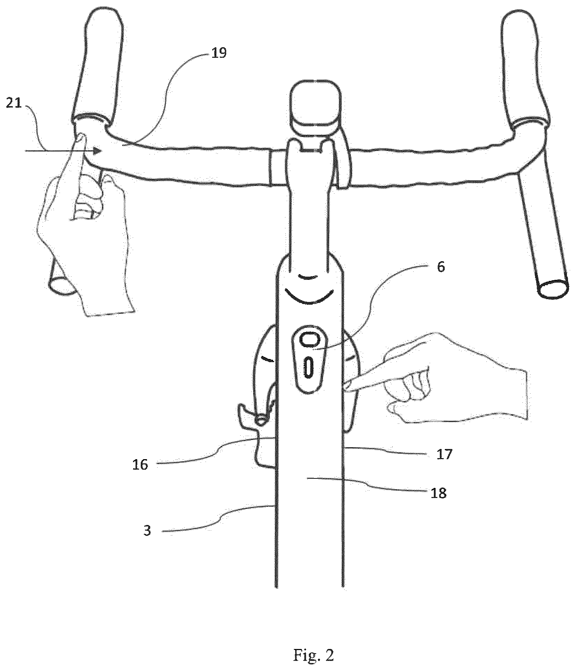

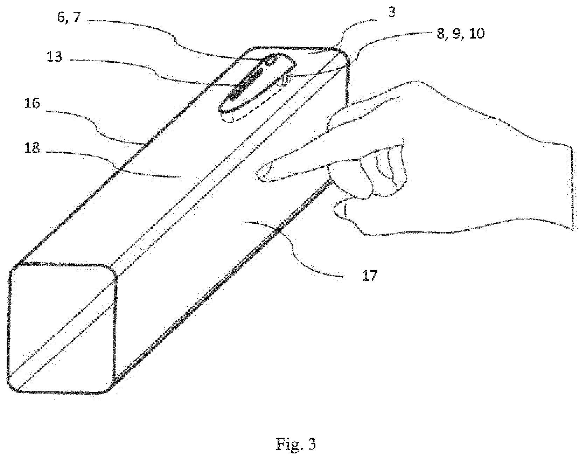

A control unit 6 is arranged at least partly in one of the tubular sections 3, 4, 5. As can be seen in figures 2 and 3 part of the control unit 6 can protrude through an opening in the tubular section 3, 4, 5. In the preferred embodiment shown in figures 1 and 2 the control unit 6 is arranged at least partly in the top tube 3 of the bicycle. The control unit 6 can therefore be easily connected via a cable 11 in the bicycle frame 2 to a battery 12 in the down tube 4. The control unit 6 can control the assist power provided by an electric motor. The control unit 6 can further include a display 13 for displaying information to the rider. The display can be for example an LED display for displaying the charge level of the battery 12.

The control unit 6 comprises a housing 7, which is rigidly attached to the tubular section 3, 4, 5, such that motion of the tubular section 3, 4, 5 in the area of the control unit results in a movement of the control unit 6. At least one accelerometer 8 is arranged within the control unit housing 7 and arranged to sense an acceleration of the tubular section 3, 4, 5 containing the control unit 6 in the area of the control unit 6. A memory 9 storing a tap recognition algorithm and a processor 10 for analyzing an output signal of the at least one accelerometer 8 is also contained within the housing 7. The processor 10 uses the tap recognition algorithm to process the signal from the accelerometer(s) 8 in order to determine a tap action from a selection of predetermined tap actions.

By using the accelerometer in the control unit 6 within the bicycle frame, the frame 2 itself can be used as the input device for controlling various aspects of the bicycle. A separate input device with cables connected to a control unit is not required, instead the operator can tap on the bicycle frame in the vicinity of the control unit as shown in figure 3, and the acceleration of the control unit 6 and the accelerometer 8 contained therein will be substantially the same as the acceleration of the frame 2 in the vicinity of the control unit 6 due to the rigid attachment of the frame 2 with the control unit housing 7. A separate input device can thus be omitted reducing component costs. The accelerometer(s) 8 in the control unit 6 can be used for other bicycle control purposes which require for speed or orientation information. For example, the at least one accelerometer 8 in the control unit 6 can also be used to provide a speed calculation algorithm stored in the control unit 6 with acceleration data for calculating a speed of the bicycle. By using the frame 2 as the input device, the operator of the bicycle 1 does not need to locate a manual switch and can tap the frame 2 whilst looking at the road ahead.

The tap recognition algorithm can be configured to differentiate between a plurality of different tap actions. The control unit 6 is configured to output a signal for controlling or operating an electrically controlled bicycle component 14, 15 based on the determined tap action. In particular, the tap recognition algorithm can be configured to differentiate between different tap actions such as a tap on the left side 16 of the tubular section 3, 4, 5, and a tap on the right side 17 of the tubular section. A tap on the left side 16 of the frame 2 can be used for example to reduce the assist level of a motor (not shown) provided on the bicycle to assist the pedal power, and a tap on the right side 17 of the frame 2 can be used to increase the assist level of the motor. Alternatively or additionally, the tap algorithm can be configured to differentiate between a tap on top side 18 of the tubular section and a tap on the lateral side 16, 17 (i.e. left or right side) of the tubular section, in particular the top tube 3. A tap on the top side 18 of the frame 2 can therefore be used e.g. to turn a front light 15 or rear light 14 on or off.

Electrically controlled bicycle components which can be controlled by the tap input include for example front or rear light (14, 15), and/or an electric motor assist of the bicycle, wherein the level of motor assist is increased or decreased depending on the determined tap action. The tap action can also be used to block or unblock or otherwise control a suspension of the bicycle.

Other parts of the bicycle, which perform conventional bicycle functions, for example the pedals 20 or the handlebar 19 can also be used as a tap input surface provided that there is a path for transmission of at least part of tap force from the tap input surface to the accelerometer via the bicycle frame 2, resulting in an acceleration of the accelerometer 8. In the case of the handlebar 19 which is pivotally attached to the frame 2, a tap in the lateral direction, indicated by arrow 21 in figure 2, would transmit force to the accelerometer 8 through the pivotal attachment of the handlebar 19 and via the frame 2.

The different sides of the frame 2, i.e. the top side 18, left side 16 and right side 17, or the handlebar 19 or a pedal 20 can therefore be used as tapping input surfaces to operate or control a plurality of different electrically controlled bicycle components 14, 15.

A method for controlling or operating an electrically controlled bicycle thus comprises providing a bicycle frame 2 as described above and sensing via the accelerometer 8 an acceleration of the tubular section 3, 4, 5 containing the control unit 6 in the area of the control unit 6, supplying an output signal of the at least one accelerometer 8 to a processor 10, and using a tap recognition algorithm to determine a tap action and controlling or operating an electrically controlled bicycle component 14, 15 based on the determined tap action.

As described above the method can include using the tap recognition algorithm to differentiate between a plurality of different tap actions from a selection of predetermined tap actions.

The different tap actions can also be in the form of a single or double tap, whereby the single tap action is determined by calculating the gradient of the acceleration between two consecutive acceleration samples, such that if the gradient exceeds a predetermined threshold a single tap action is determined, and wherein a double tap action is determined when two consecutive single tap actions are determined within a predetermined time window. The tap recognition algorithm can be defined by machine learning.

A tap action can be in the form of a specific combination of different taps. For example, a specific combination of taps can be defined from at least two of: a single left tap, a single right tap, a single top tap, a double left tap, a double right tap, a double top tap. This combination is then recognized by the tap recognition algorithm as a specific tap action, which can then be used for controlling an electric component 12, 14, 15 of the bicycle 1. The electrical component can be the battery 12 such that power from the battery can only be supplied to an electric motor after a specific unlocking combination of taps is performed.

### LIST OF REFERENCE NUMERALS

1. Bicycle
2. Frame
3. Top tube
4. Down tube
5. Seat tube
6. Control unit
7. Housing
8. Accelerometer
9. Memory
10. Processor
11. Cable
12. Battery
13. Display
14. Rear light
15. Front light
16. Left side
17. Right side
18. Top side
19. Handlebar
20. Pedals
21. Lateral direction

## Claims

1. A bicycle frame (2) for supporting a front wheel and a rear wheel, the frame (2) comprising a plurality of tubular sections (3, 4, 5), a control unit (6) arranged at least partly within one of the tubular sections (3,4, 5), wherein the control unit (6) comprises a housing (7), which is rigidly attached to the tubular section (3, 4, 5), wherein at least one accelerometer (8) is arranged within the control unit housing (7) and arranged to sense an acceleration of the tubular section (3, 4, 5) containing the control unit (6) in the area of the control unit (6), and further comprising a memory (9) storing a tap recognition algorithm and a processor (10) for analyzing an output signal of the at least one accelerometer (8) using the tap recognition algorithm to determine a tap action.

2. A bicycle frame (2) according to claim 1, wherein the tap recognition algorithm is configured to differentiate between a plurality of different predetermined tap actions, which actions include in particular a tap on a different parts of the frame (2)

3. A bicycle frame (2) according to claim 2, wherein the tap algorithm is configured to differentiate between a tap on the left side of the tubular section and a tap on the right side of the tubular section, and/or the tap algorithm is configured to differentiate between a tap on top side of the tubular section from a tap on the lateral side of the tubular section.

4. A bicycle frame (2) according to one of the preceding claims, wherein the tap recognition algorithm is defined by machine learning.

5. A bicycle frame (2) according to one of the preceding claims, wherein the control unit (6) is arranged at least partly in the top tube (3) of the bicycle frame (2) wherein the control unit (6) is configured to output a signal for controlling or operating an electrically controlled bicycle component based on the determined tap action.

6. A bicycle frame (2) according to one of the preceding claims, wherein the plurality of different tap actions comprises at least a single tap action and a double tap action, whereby the single tap action is determined by calculating the gradient of the acceleration between two consecutive acceleration samples, such that if the gradient exceeds a predetermined threshold a single tap action is determined, and wherein a double tap action is determined when two consecutive single tap actions are determined within a predetermined time window.

7. A bicycle (1) comprising a bicycle frame (2) according to one of the preceding claims, and further comprising pedals (20) and a handlebar (19) pivotally attached to the frame (2), wherein the tap recognition algorithm is designed to recognize a tap on the pedals (20) and/or the handlebar (19), such that the pedals (20) and/or the handlebar (19) act as a tap input surface.

8. A bicycle (1) according to claim 7, comprising at least one of an electric motor, a front light and a rear light, wherein the determined tap action controls either the on or off state of the front or rear light or the level of pedal assist provided by the electric motor, wherein in the case of controlling the level of pedal assist the level of motor assist is increased or decreased depending on the determined tap action.

9. A bicycle (1) according to claim 7 or claim 8 wherein the at least one accelerometer (8) in the control unit (6) provides a speed calculation algorithm stored in the memory (9) of the control unit (6) with acceleration data for calculating a speed of the bicycle.

10. Method for controlling or operating an electrically controlled bicycle component (14, 15), the method comprising providing a bicycle having a bicycle frame (2) according to one of the preceding claims, sensing via the accelerometer (8) an acceleration of the tubular section containing the control unit (6) in the area of the control unit (6), supplying an output signal of the at least one accelerometer (8) to a processor (10) which uses a tap recognition algorithm to determine a tap action, and controlling or operating an electrically controlled bicycle component (15, 15) based on the determined tap action.

11. Method according to claim 10, further comprising using the tap recognition algorithm to differentiate between a plurality of different tap actions.

12. Method according to claim 10, wherein the plurality of different tap actions comprise a single tap action and/or a double tap action, wherein the single tap action is determined by calculating the gradient of the acceleration between two consecutive acceleration samples, such that if the gradient exceeds a predetermined threshold a single tap action is determined, and wherein a double tap action is determined when two consecutive single tap actions are determined within a predetermined time window.

13. Method according to claim 10, wherein the tap algorithm is configured to differentiate between a single tap on the left side of the tubular section and a single tap on the right side of the tubular section, and/or the tap algorithm is configured to differentiate between a single tap on top side of the tubular section and a single tap on the lateral side of the tubular section.

14. Method according to claim 10, wherein the electrically controlled bicycle component is
- a front or rear light (14, 15), and/or
- an electric motor assist of the bicycle, wherein the level of motor assist is increased or decreased depending on the determined tap action, and/or
- a suspension of the bicycle.

15. Use of a bicycle frame (2) or a bicycle handlebar (19) or a bicycle pedal (20) of a bicycle as a tap input surface for controlling or operating an electrically controlled bicycle component (14, 15), whereby the bicycle frame (2) comprises a plurality of tubular sections (3, 4, 5), and a control unit (6) is arranged at least partly in one of the tubular sections (3, 4, 5), preferably a top tube (3), wherein the control unit (6) comprises a housing (7), which is rigidly attached to the tubular section (3, 4, 5), wherein at least one accelerometer (8) is arranged within the control unit housing (7) and is capable of sensing an acceleration of the tubular section (3, 4, 5) containing the control unit (6) in the area of the control unit (6), the acceleration being due to a tap on the tap input surface, and the control unit (6) further comprising a memory (9) storing a tap recognition algorithm and a processor (10) for analyzing an output signal of the at least one accelerometer (8) using the tap recognition algorithm in order to determine a tap action from a selection of predetermined tap actions.

## Patentansprüche

1. Fahrradrahmen (2) zum Tragen eines Vorderrads und eines Hinterrads, der Rahmen (2) umfassend eine Vielzahl von Rohrabschnitten (3, 4, 5), eine Steuereinheit (6), die mindestens teilweise innerhalb eines der Rohrabschnitte (3, 4, 5) angeordnet ist, wobei die Steuereinheit (6) ein Gehäuse (7) umfasst, das starr an dem Rohrabschnitt (3, 4, 5) befestigt ist, wobei mindestens ein Beschleunigungsmesser (8) innerhalb des Gehäuses (7) der Steuereinheit angeordnet ist und angeordnet ist, um eine Beschleunigung des Rohrabschnitts (3, 4, 5), der die Steuereinheit (6) enthält, in dem Bereich der Steuereinheit (6) zu erfassen, und ferner umfassend einen Speicher (9), der einen Tipperkennungsalgorithmus speichert, und einen Prozessor (10) zum Analysieren eines Ausgabesignals des mindestens einen Beschleunigungsmessers (8) unter Verwendung des Tipperkennungsalgorithmus, um eine Tippaktion zu bestimmen.

2. Fahrradrahmen (2) nach Anspruch 1, wobei der Tipperkennungsalgorithmus konfiguriert ist, um zwischen einer Vielzahl von unterschiedlichen vorbestimmten Tippaktionen zu unterscheiden, wobei die Aktionen insbesondere ein Tippen auf unterschiedliche Teile des Rahmens (2) einschließen

3. Fahrradrahmen (2) nach Anspruch 2, wobei der Tippalgorithmus konfiguriert ist, um zwischen einem Tippen auf der linken Seite des Rohrabschnitts und einem Tippen auf der rechten Seite des Rohrabschnitts zu unterscheiden, und/oder der Tippalgorithmus konfiguriert ist, um zwischen einem Tippen auf der oberen Seite des Rohrabschnitts und einem Tippen auf der lateralen Seite des Rohrabschnitts zu unterscheiden.

4. Fahrradrahmen (2) nach einem der vorstehenden Ansprüche, wobei der Tipperkennungsalgorithmus durch maschinelles Lernen definiert ist.

5. Fahrradrahmen (2) nach einem der vorstehenden Ansprüche, wobei die Steuereinheit (6) mindestens teilweise in dem oberen Rohr (3) des Fahrradrahmens (2) angeordnet ist, wobei die Steuereinheit (6) konfiguriert ist, um basierend auf der bestimmten Tippaktion ein Signal zum Steuern oder Bedienen einer elektrisch gesteuerten Fahrradkomponente auszugeben.

6. Fahrradrahmen (2) nach einem der vorstehenden Ansprüche, wobei die Vielzahl der unterschiedlichen Tippaktionen mindestens eine einzelne Tippaktion und eine doppelte Tippaktion umfasst, wobei die einzelne Tippaktion durch ein Berechnen des Gradienten der Beschleunigung zwischen zwei aufeinanderfolgenden Beschleunigungsaufnahmen derart bestimmt wird, dass, falls der Gradient einen vorbestimmten Schwellenwert überschreitet, eine einzelne Tippaktion bestimmt wird, und wobei eine doppelte Tippaktion bestimmt wird, wenn zwei aufeinanderfolgende einzelne Tippaktionen innerhalb eines vorbestimmten Zeitfensters bestimmt werden.

7. Fahrrad (1), umfassend einen Fahrradrahmen (2) nach einem der vorstehenden Ansprüche, und ferner umfassend Pedale (20) und einen Lenker (19), der schwenkbar an dem Rahmen (2) befestigt ist, wobei der Tipperkennungsalgorithmus ausgelegt ist, um ein Tippen auf die Pedale (20) und/oder den Lenker (19) derart zu erkennen, dass die Pedale (20) und/oder der Lenker (19) als eine Tippeingabeoberfläche fungieren.

8. Fahrrad (1) nach Anspruch 7, umfassend mindestens eines von einem Elektromotor, einem Vorderlicht und einem Rücklicht, wobei die bestimmte Tippaktion entweder den Ein- oder Aus-Zustand des Vorder- oder Rücklichts oder die Stufe einer Tretunterstützung steuert, die durch den Elektromotor bereitgestellt wird, wobei in dem Fall des Steuerns der Stufe der Tretunterstützung die Stufe der Motorunterstützung abhängig von der bestimmten Tippaktion erhöht oder verringert wird.

9. Fahrrad (1) nach Anspruch 7 oder 8, wobei der mindestens eine Beschleunigungsmesser (8) in der Steuereinheit (6) einen Geschwindigkeitsberechnungsalgorithmus, der in dem Speicher (9) der Steuereinheit (6) gespeichert ist, mit Beschleunigungsdaten zum Berechnen einer Geschwindigkeit des Fahrrads versorgt.

10. Verfahren zum Steuern oder Bedienen einer elektrisch gesteuerten Fahrradkomponente (14, 15), das Verfahren umfassend das Bereitstellen eines Fahrrads, das einen Fahrradrahmen (2) aufweist, nach einem der vorstehenden Ansprüche, das Erfassen, über den Beschleunigungsmesser (8), einer Beschleunigung des Rohrabschnitts, der die Steuereinheit (6) enthält, in dem Bereich der Steuereinheit (6), ein Zuführen eines Ausgabesignals des mindestens einen Beschleunigungsmessers (8) zu einem Prozessor (10), der einen Tipperkennungsalgorithmus verwendet, um eine Tippaktion zu bestimmen, und das Steuern oder Bedienen einer elektrisch gesteuerten Fahrradkomponente (15, 15) basierend auf der bestimmten Tippaktion.

11. Verfahren nach Anspruch 10, ferner umfassend das Verwenden des Tipperkennungsalgorithmus, um zwischen einer Vielzahl von unterschiedlichen Tippaktionen zu unterscheiden.

12. Verfahren nach Anspruch 10, wobei die Vielzahl von unterschiedlichen Tippaktionen eine einzelne Tippaktion und/oder eine doppelte Tippaktion umfasst, wobei die einzelne Tippaktion durch das Berechnen des Gradienten der Beschleunigung zwischen zwei aufeinanderfolgenden Beschleunigungsaufnahmen derart bestimmt wird, dass, falls der Gradient einen vorbestimmten Schwellenwert überschreitet, eine einzelne Tippaktion bestimmt wird, und wobei eine doppelte Tippaktion bestimmt wird, wenn zwei aufeinanderfolgende einzelne Tippaktionen innerhalb eines vorbestimmten Zeitfensters bestimmt werden.

13. Verfahren nach Anspruch 10, wobei der Tippalgorithmus konfiguriert ist, um zwischen einem einzelnen Tippen auf der linken Seite des Rohrabschnitts und einem einzelnen Tippen auf der rechten Seite des Rohrabschnitts zu unterscheiden, und/oder der Tippalgorithmus konfiguriert ist, um zwischen einem einzelnen Tippen auf der oberen Seite des Rohrabschnitts und einem einzelnen Tippen auf der lateralen Seite des Rohrabschnitts zu unterscheiden.

14. Verfahren nach Anspruch 10, wobei die elektrisch gesteuerte Fahrradkomponente ist
- ein Vorder- oder Rücklicht (14, 15), und/oder
- eine elektrische Motorunterstützung des Fahrrads, wobei die Stärke der Motorunterstützung abhängig von der bestimmten Tippaktion erhöht oder verringert wird, und/oder
- eine Federung des Fahrrads.

15. Verwendung eines Fahrradrahmens (2) oder eines Fahrradlenkers (19) oder eines Fahrradpedals (20) eines Fahrrads als eine Tippeingabeoberfläche zum Steuern oder Bedienen einer elektrisch gesteuerten Fahrradkomponente (14, 15), wobei der Fahrradrahmen (2) eine Vielzahl von Rohrabschnitten (3, 4, 5) umfasst und eine Steuereinheit (6) mindestens teilweise in einem der Rohrabschnitte (3, 4, 5), vorzugsweise einem oberen Rohr (3), angeordnet ist, wobei die Steuereinheit (6) ein Gehäuse (7) umfasst, das starr an dem Rohrabschnitt (3, 4, 5) befestigt ist, wobei mindestens ein Beschleunigungsmesser (8) innerhalb des Gehäuses (7) der Steuereinheit angeordnet ist und in der Lage ist, eine Beschleunigung des Rohrabschnitts (3, 4, 5), der die Steuereinheit (6) enthält, in dem Bereich der Steuereinheit (6) zu erfassen, wobei die Beschleunigung auf ein Tippen auf die Tippeingabeoberfläche zurückzuführen ist, und die Steuereinheit (6) ferner umfassend einen Speicher (9), der einen Tipperkennungsalgorithmus speichert, und einen Prozessor (10) zum Analysieren eines Ausgabesignals des mindestens einen Beschleunigungsmessers (8) unter Verwendung des Tipperkennungsalgorithmus, um eine Tippaktion aus einer Auswahl von vorbestimmten Tippaktionen zu bestimmen.

## Revendications

1. Cadre de bicyclette (2) permettant de supporter une roue avant et une roue arrière, le cadre (2) comprenant une pluralité de sections tubulaires (3, 4, 5), une unité de commande (6) disposée au moins en partie à l'intérieur de l'une des sections tubulaires (3, 4, 5), dans lequel l'unité de commande (6) comprend un boîtier (7), qui est attaché rigidement à la section tubulaire (3, 4, 5), dans lequel au moins un accéléromètre (8) est disposé à l'intérieur du boîtier d'unité de commande (7) et disposé pour détecter une accélération de la section tubulaire (3, 4, 5) contenant l'unité de commande (6) dans la zone de l'unité de commande (6), et comprenant en outre une mémoire (9) stockant un algorithme de reconnaissance de tapotement et un processeur (10) pour analyser un signal de sortie de l'au moins un accéléromètre (8) à l'aide de l'algorithme de reconnaissance de tapotement pour déterminer une action de tapotement.

2. Cadre de bicyclette (2) selon la revendication 1, dans lequel l'algorithme de reconnaissance de tapotement est configuré pour différencier une pluralité d'actions de tapotement prédéterminées, lesquelles actions comportent en particulier un tapotement sur différentes parties du cadre (2)

3. Cadre de bicyclette (2) selon la revendication 2, dans lequel l'algorithme de tapotement est configuré pour différencier un tapotement sur le côté gauche de la section tubulaire et un tapotement sur le côté droit de la section tubulaire, et/ou l'algorithme de tapotement est configuré pour différencier un tapotement sur le côté supérieur de la section tubulaire d'un tapotement sur le côté latéral de la section tubulaire.

4. Cadre de bicyclette (2) selon l'une des revendications précédentes, dans lequel l'algorithme de reconnaissance de tapotement est défini par apprentissage automatique.

5. Cadre de bicyclette (2) selon l'une quelconque des revendications précédentes, dans lequel l'unité de commande (6) est disposée au moins en partie dans le tube supérieur (3) du cadre de bicyclette (2), dans lequel l'unité de commande (6) est configurée pour délivre en sortie un signal de commande ou d'actionnement d'un composant de bicyclette à commande électrique sur la base de l'action de tapotement déterminée.

6. Cadre de bicyclette (2) selon l'une quelconque des revendications précédentes, dans lequel la pluralité d'actions de tapotement différentes comprend au moins une action de tapotement simple et une action de tapotement double, l'action de tapotement simple étant déterminée en calculant le gradient de l'accélération entre deux échantillons d'accélération consécutifs, de telle sorte que si le gradient dépasse un seuil prédéterminé, une action de tapotement simple est déterminée, et dans lequel une action de tapotement double est déterminée lorsque deux actions de tapotement simple consécutives sont déterminées dans un laps de temps prédéterminé.

7. Bicyclette (1) comprenant un cadre de bicyclette (2) selon l'une quelconque des revendications précédentes, et comprenant en outre des pédales (20) et un guidon (19) attachés de manière pivotante au cadre (2), dans lequel l'algorithme de reconnaissance de tapotement est configuré pour reconnaître un tapotement sur les pédales (20) et/ou le guidon (19), de telle sorte que les pédales (20) et/ou le guidon (19) agissent comme une surface d'entrée de tapotement.

8. Bicyclette (1) selon la revendication 7, comprenant au moins un moteur électrique, un feu avant et un feu arrière, dans laquelle l'action de tapotement déterminée commande soit l'état allumé ou éteint du feu avant ou arrière, soit le niveau d'assistance au pédalage fourni par le moteur électrique, dans laquelle, dans le cas de commande du niveau d'assistance au pédalage, le niveau d'assistance de moteur est augmenté ou diminué en fonction de l'action de tapotement déterminée.

9. Bicyclette (1) selon la revendication 7 ou la revendication 8, dans laquelle l'au moins un accéléromètre (8) dans l'unité de commande (6) fournit à un algorithme de calcul de vitesse stocké dans la mémoire (9) de l'unité de commande (6) avec des données d'accélération pour calculer une vitesse de la bicyclette.

10. Procédé de commande ou d'actionnement d'un composant de bicyclette à commande électrique (14, 15), le procédé comprenant la fourniture d'une bicyclette présentant un cadre de bicyclette (2) selon l'une quelconque des revendications précédentes, la détection par l'accéléromètre (8) d'une accélération de la section tubulaire contenant l'unité de commande (6) dans la zone de l'unité de commande (6), la fourniture d'un signal de sortie de l'au moins un accéléromètre (8) à un processeur (10) qui utilise un algorithme de reconnaissance de tapotement pour déterminer une action de tapotement, et la commande ou l'actionnement d'un composant de bicyclette à commande électrique (15, 15) sur la base de l'action de tapotement déterminée.

11. Procédé selon la revendication 10, comprenant en outre l'utilisation de l'algorithme de reconnaissance de tapotement pour différencier une pluralité d'actions de tapotement différentes.

12. Procédé selon la revendication 10, dans lequel la pluralité d'actions de tapotement différentes comprend une action de tapotement simple et/ou une action de tapotement double, dans lequel l'action de tapotement simple est déterminée en calculant le gradient de l'accélération entre deux échantillons d'accélération consécutifs, de telle sorte que si le gradient dépasse un seuil prédéterminé, une action de tapotement simple est déterminée, et dans lequel une action de tapotement double est déterminée lorsque deux actions de tapotement simple consécutives sont déterminées dans un laps de temps prédéterminé.

13. Procédé selon la revendication 10, dans lequel l'algorithme de tapotement est configuré pour différencier un tapotement simple sur le côté gauche de la section tubulaire et un tapotement simple sur le côté droit de la section tubulaire, et/ou l'algorithme de tapotement est confguré pour différencier un tapotement simple sur le côté supérieur de la section tubulaire et un tapotement simple sur le côté latéral de la section tubulaire.

14. Procédé selon la revendication 10, dans lequel le composant de la bicyclette à commande électrique est
- un feu avant ou arrière (14, 15), et/ou
- une assistance électrique de la bicyclette, dans laquelle le niveau d'assistance est augmenté ou diminué en fonction de l'action de tapotement déterminée, et/ou
- une suspension de la bicyclette.

15. Utilisation d'un cadre de bicyclette (2) ou d'un guidon de bicyclette (19) ou d'une pédale de bicyclette (20) d'une bicyclette comme surface d'entrée de tapotement pour commander ou actionner un composant de bicyclette à commande électrique (14, 15), le cadre de bicyclette (2) comprenant une pluralité de sections tubulaires (3, 4, 5), et une unité de commande (6) est disposée au moins en partie dans l'une des sections tubulaires (3, 4, 5), de préférence un tube supérieur (3), dans laquelle l'unité de commande (6) comprend un boîtier (7), qui est rigidement attaché à la section tubulaire (3, 4, 5), dans laquelle au moins un accéléromètre (8) est disposé à l'intérieur du boîtier d'unité de commande (7) et est capable de détecter une accélération de la section tubulaire (3, 4, 5) contenant l'unité de commande (6) dans la zone de l'unité de commande (6), l'accélération étant due à un tapotement sur la surface d'entrée de tapotement, et l'unité de commande (6) comprend en outre une mémoire (9) stockant un algorithme de reconnaissance de tapotement et un processeur (10) pour analyser un signal de sortie de l'au moins un accéléromètre (8) à l'aide de l'algorithme de reconnaissance de tapotement afin de déterminer une action de tapotement à partir d'une sélection d'actions de tapotement prédéterminées.
